# FASCICULE DE BREVET EUROPEEN

(11) **EP 0 741 844 B1**
(45) Date de publication et mention de la délivrance du brevet: **12.05.1999**
(21) Numéro de dépôt: 95908308.0
(22) Date de dépôt: 03.02.1995
(51) Int. Cl.: F16H 9/10, F16H 55/54

(54) **VARIATEUR DE VITESSE EN CONTINU A ENTRAINEMENT POSITIF**
FORMSCHLÜSSIGES, STUFENLOSES GETRIEBE
POSITIVELY DRIVEN CONTINUOUSLY VARIABLE SPEED DRIVE UNIT

(30) Priorité: 03.02.1994 FR 9401478
(43) Date de publication de la demande: 13.11.1996
(73) Titulaire: Nard, Gilles, 63000 Clermont-Ferrand (FR)
(72) Inventeur: Nard, Gilles, 63000 Clermont-Ferrand (FR)
(74) Mandataire: Chanet, Jacques
(86) Numéro de dépôt international: FR9500135
(87) Numéro de publication internationale: WO9521340

(56) Documents cités:
- EP-A- 0 145 195
- WO-A-93/07045
- CH-A- 616 493
- FR-A- 947 416

## Description

L'invention est du domaine de la transmission mécanique, et elle a pour objet un variateur de vitesse en continu apte à la transmission de couples élevés.

On connaît de nombreux variateur de vitesse destinés à être intercalés entre un organe moteur et un organe récepteur.

On connaît parmi ces variateurs ceux d'un premier type proposant des variations de vitesse prédéterminées. Ces variateurs sont constitués dans leur généralité d'un jeu de pignons de différents diamètres qui engraînent alternativement les uns avec les autres, en vue d'obtenir des variations de vitesse en fonction des différentes combinaisons d'engrenage possibles.

Un inconvénient de ces variateurs réside dans le fait que les variations de vitesse ne peuvent pas être obtenues suivant des valeurs continues, celles-ci étant prédéterminées par les dites combinaisons possibles, et que, de ce fait, le nombre des différents rapports qu'ils proposent restent limités.

On connaît aussi par la publication CH-616493, le document le plus proche, un variateur de vitesse mettant en oeuvre une couronne à diamètre variable engrenant sur un organe souple de transmission, dans lequel la variation de vitesse s'effectue par paliers successifs suivant une valeur déterminée en fonction du pas de crantage de l'organe de transmission sur lequel engrène la couronne.

On connaît des variateurs de vitesse d'un deuxième type proposant des variations de vitesse suivant des valeurs continues. Ces variateurs sont constitués dans leur généralité d'au moins une roue à diamètre variable reliée à l'un des organes moteur ou récepteur par l'intermédiaire d'une courroie lisse. L'exemple le plus commun est celui d'un variateur mettant en oeuvre une courroie à section trapézoïdale maintenue entre deux flasques pentus, ces derniers pouvant se rapprocher l'un de l'autre et formant ainsi la dite roue à diamètre variable.

Le but de l'invention est de proposer un variateur en continu de vitesse, pouvant fonctionner avec des couples de transmission importants et offrant une perte de puissance négligeable.

Selon l'invention, un variateur de vitesse en continu, du genre de ceux destinés à être intercalés entre un organe moteur et un organe récepteur de manière à les relier dynamiquement, comprend les caractéristiques de la revendication 1.

Il résulte de ces dispositions, une variation de diamètre de la couronne conduisant les pignons en prise sur la courroie de transmission à pivoter sur eux-mêmes, que le pivotement des dits pignons en prise est transmis à l'ensemble des pignons de transmission, et notamment à ceux qui ne sont pas encore en prise avec la courroie, et finalement que l'encrantage entre l'ensemble des pignons de transmission et la courroie de transmission est rendu certain, quelle que soit la valeur de la variation de diamètre de la couronne, et notamment une valeur non multiple de son pas.

De préférence, les moyens d'assujettissement en pivotement des pignons de transmission sont formés d'une courroie dentée, dite d'assujettissement, ceinturant la couronne de transmission en engainant sur les pignons, au moins l'un des brins d'extrémité de la courroie d'assujettissement constituant une réserve de courroie en vue de permettre la variation de diamètre de la couronne, le dit brin d'extrémité étant relié à des moyens de sollicitation en traction pour maintenir l'encrantage de la courroie d'assujettissement sur la couronne, notamment lors d'une réduction de diamètre de cette dernière.

De préférence encore, les dits moyens pour faire varier le diamètre de la couronne comprennent, des moyens de sollicitation en extension de la couronne, à l'encontre d'une sollicitation en contraction exercée par la courroie de transmission, par l'intermédiaire de moyens tendeurs par exemple, et des moyens de commande des dits moyens de sollicitation.

Préférentiellement, l'un des brins d'extrémité de la courroie d'assujettissement est enroulé sur, et fixé à, un tambour monté tournant sur le corps, celui-ci étant pourvu de moyens tendant à induire sa rotation sur lui même, ces derniers moyens constituant les dits moyens de sollicitation en traction de la courroie d'assujettissement, et l'autre brin d'extrémité de la courroie d'assujettissement est soit enroulé sur, et fixé à, l'un des pignons de transmission, soit fixé sur le corps par l'intermédiaire de moyens tendeurs.

Selon une forme préférée de réalisation, le variateur comprend :
- une première pluralité de pignons de transmission formant une première dite couronne, dite menante, reliée à l'organe moteur par une première courroie de transmission, dite menante,
- une deuxième pluralité de pignons de transmission formant une deuxième dite couronne, dite menée, reliée à l'organe récepteur par une deuxième courroie- de transmission, dite menée,
les moyens pour faire varier le diamètre de l'une quelconque des couronnes étant des moyens antagonistes aux moyens pour faire varier le diamètre de l'autre couronne, de telle sorte que la variation du diamètre de l'une quelconque des couronnes induise une variation complémentaire inverse de l'autre couronne.

Préférentiellement, les moyens de variation du diamètre des couronnes sont formés d'un jeu de double, au moins, manivelles à trois paliers, dont deux d'extrémité et un médian, chacune des manivelles supportant respectivement un pignon des couronnes menante et menée à leurs paliers d'extrémités, et étant montées pivotante sur le corps par leur palier médian.

De préférence, les paliers médians des manivelles sont pourvus d'une pignonerie, dite de variation, pour rendre simultané leur pivotement.

Il résulte de ces dispositions que la variation de diamètre des couronnes est simultanée pour l'un quelconque des points de leur-périphérie.

Par exemple, les paliers médians sont chacun solidaire d'un pignon, dit de variation, engrenant, soit sur une roue dentée, dite de variation, montée tournante sur le corps coaxialement aux couronnes, soit sur une courroie crantée, dite de variation, ceinturant la couronne formée conjointement par l'ensemble des pignons de variation.

Selon une première forme de réalisation, non préférée, les courroies d'assujettissement des couronnes menante et menée sont respectivement les deux brins d'extrémité d'une même courroie reliés l'un à l'autre par un brin intermédiaire circulant depuis l'une vers l'autre des couronnes par l'intermédiaire de pignons de renvoie supportés par le corps, de telle sorte que la courroie d'assujettissement de l'une quelconque des couronnes menante et menée constitue la dite réserve de la courroie d'assujettissement de l'autre des couronnes, et que l'une quelconque des couronnes constitue le dit moyen de sollicitation en traction de la courroie d'assujettissement de l'autre couronne.

Selon une deuxième forme de réalisation, préférée, les courroies d'assujettissement des couronnes menante et menée sont reliées à un même tambour, celui-ci étant de préférence coaxial aux couronnes, leur brin d'extrémité correspondant entourant inversement ce dernier.

Il résulte de ces dispositions que l'une quelconque des couronnes constitue le dit moyen de sollicitation en traction de la courroie d'assujettissement de l'autre des couronnes.

De préférence, les moyens de commande des moyens de variation du diamètre des couronnes sont constitués par des moyens d'éloignement du corps de l'un quelconque des organes moteur et récepteur, les dits moyens d'éloignement du corps étant mis en oeuvre soit manuellement, soit par l'intermédiaire de moyens motorisés.

Par exemple, un éloignement du corps par rapport à l'organe moteur induit un rapprochement des brins de la courroie de transmission menante, ce qui provoque une diminution du diamètre de la couronne menante et de ce fait une augmentation du diamètre de la couronne menée ; de même, un éloignement du corps par rapport à l'organe récepteur provoquera un résultat inverse au précédent.

Selon une autre forme de réalisation, non préférée, des moyens de commande, ceux-ci sont des moyens de type centrifuge, par exemple des masselottes affectées à chacun des pignons, ceux-ci pouvant former eux-mêmes les dites masselottes.

Avantageusement, les dits moyens de commande sont placés sous la dépendance d'un automate, de type mécanique et/ou électronique, pour offrir notamment des variations de vitesses indexées ; de telles dispositions trouvent leur application, par exemple, dans le domaine des machines-outils.

La présente invention sera mieux comprise et des détails en relevant apparaîtront à la description qui va être faîte de formes préférées de réalisation en relation avec les figures des planches annexées, dans lesquelles :
la fig.1 est une vue schématique en perspective d'une forme privilégiée d'un variateur de vitesse de l'invention,
les fig.2a et 2b sont des illustrations successives de moyens d'assujettissement préférés du pivotement des pignons de transmission d'un variateur de l'invention,
la fig.3 est une vue en coupe longitudinale d'un variateur de l'invention, tel que schématisé sur la fig.1,
la fig.4 est une vue en perspective éclatée selon une forme préférée de montage coaxial d'un pignon de transmission associé à un pignon d'assujettissement,
la fig.5 est une illustration schématique d'une application particulière de l'invention.
la fig.6 est un schéma qui illustre une conformation particulière des organes d'encrantage des pignons composant les couronnes et des courroies de transmission,
la fig.7 est une vue en coupe longitudinale d'une forme spécifique de réalisation de l'invention appliquée à un "vélo",
les fig.8a à 8d sont des schémas de principe successifs illustrant le fonctionnement du dispositif représenté sur la figure précédente.

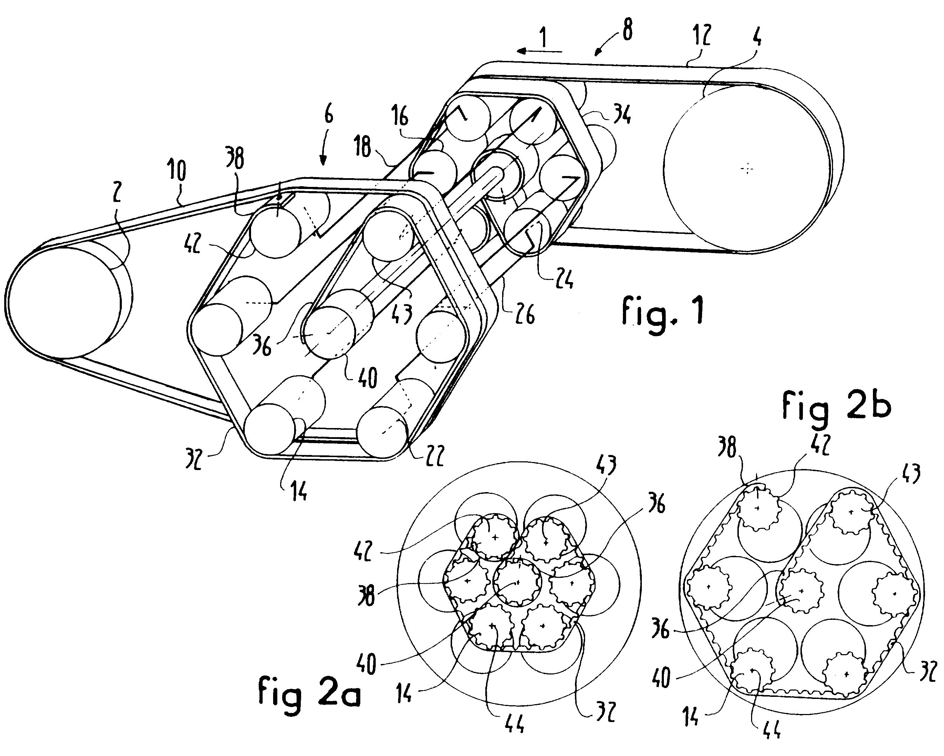

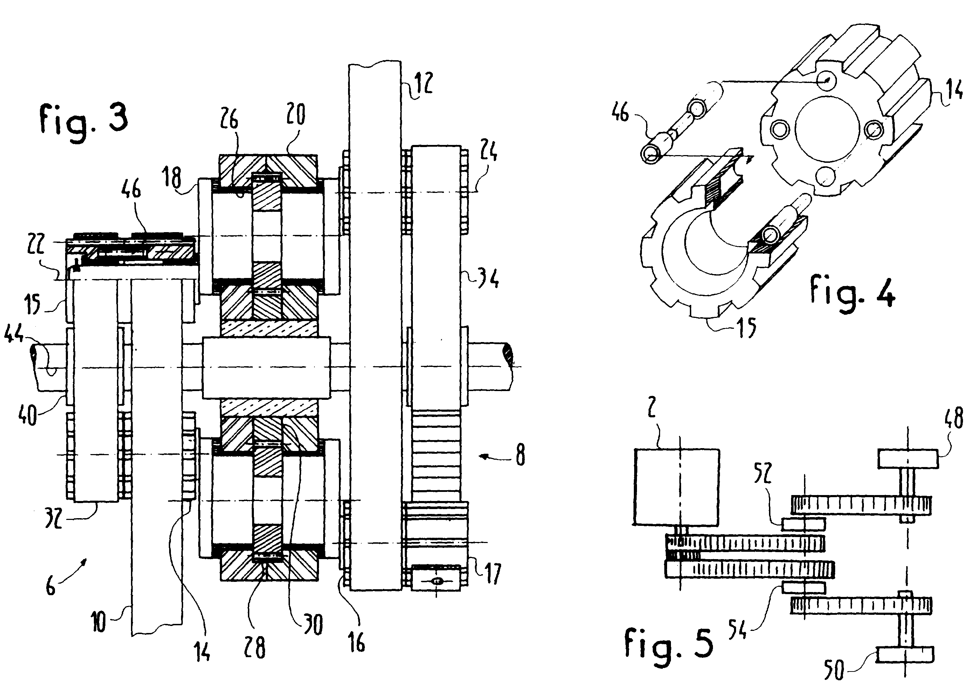

Sur les fig.1 et 3, un variateur de vitesse est destiné à être intercalé entre un organe moteur 2 et un organe récepteur 4. Ce variateur est principalement constitué de deux couronnes, l'une menante 6 et l'autre menée 8, respectivement reliées aux organes moteur 2 et récepteur 4 par des courroies crantés 10 et 12, chaque couronne 6 et 8 étant formée à partir d'une pluralité de pignons périphériques, tels que 14 et 16.

Les pignons 14 et 16 des couronnes menantes 6 et menées 8 sont supportés par des doubles manivelles respectives à trois paliers, telles que 18, chaque manivelle 18 supportant respectivement à ses paliers d'extrémité 22 et 24 un pignon 14 et/16 de l'une des couronnes, et étant montée pivotante sur un corps 20 (non représenté sur la fig.1) à son palier médian 26. Les manivelles 18 constituent des moyens antagonistes de variation du diamètre de chacune des couronnes 6 et 8, la variation du diamètre de l'une des couronnes induisant une variation complémentairement inverse de l'autre couronne : un rapprochement des pignons 14 et/ou 16 de l'une des couronnes 6 et/ou 8 de son axe, induit un pivotement des manivelles 18, et de ce fait un éloignement du même axe des pignons 14 et/ou 16 de l'autre couronne 6 et/ou 8.

Pour commander, par exemple, une augmentation de diamètre de la couronne menante 6, en vue de réduire la vitesse de transmission entre les organes menant 2 et mené 4, l'utilisateur éloigne (1) le corps 20 de l'organe mené 4. Cet éloignement (1) induit un rapprochement des brins de la courroie menée 12 et de ce fait une réduction du diamètre de la couronne menée 8, ce qui a pour effet de solliciter en extension la couronne menante 6 à l'encontre d'une sollicitation en contraction exercée par la courroie de transmission menante 10. On notera la présence souhaitée de moyens tendeurs, non représentés sur les figures, des courroies menante 10 et menée 12.

On remarquera sur la fig.3 la présence d'une pignonerie, dite de variation, comprenant des pignons 28, solidaires du palier médian 26 des manivelles 18, engrenant sur une roue dentée 30 montée tournante sur le corps 20 coaxialement aux couronnes 6 et 8. Cette pignonerie de variation 28,30 est destinée à rendre simultanés l'ensemble des déplacements des pignons 14 et 16 de transmissions par rapport à l'axe des couronnes 6 et 8, pour que les variations de diamètre de ces dernières 6 et 8 s'effectuent de manière homogène.

Une telle structure, visant à procurer une variation en continu de vitesse entre un organe menant 2 et un organe mené 4, ne peut fonctionner que dans la mesure où les pignons de transmission 14 et 16 sont maintenus en phase avec les crans de leur courroie de transmission respectives 10 et 12, quelles que soient les variations commandées du diamètre des couronnes 6 et 8 :

Sur les fig.1 à 3, les pignons de transmission 14 et 16 sont respectivement équipés d'une courroie d'assujettissement 32 et 34, permettant d'assujettir le pivotement sur eux-mêmes des pignons 14 et/ou 16 les uns vis à vis des autres, respectivement pour chaque couronne 6 et 8, en vue d'obtenir la dite mise en phase. Ces courroies 32 et 34 ceinturent respectivement les couronnes 6 et 8 en engraînant sur les pignons 14 et 16, leurs brins d'extrémité respectifs, tels que 36 et 38, étant enroulés sur, et fixé à, pour le premier 36, un tambour 40 monté tournant sur le corps 20, et pour le second 38, l'un 42 des pignons de transmission, en vue de constituer des réserves de courroie pour permettre la variation de diamètre des couronnes 6 et 8.

On notera que dans le cas représenté sur les figures, où les courroies d'assujettissement 32 et 34 sont enroulées sur, et fixées à, l'un de leurs pignons de transmission respectifs, tel que 42, ces derniers doivent être immobilisés en rotation pour que le brin d'extrémité 38 correspondant des courroies d'assujettissement puisse constituer une réserve de courroie, la mise en phase du pignon de transmission 42 avec sa courroie de transmission 10 ou 12 respective résultant de son pivotement autour de l'axe de la manivelle 18 qui le supporte.

Sur les fig.2a et 2b, lors d'une variation de diamètre de la couronne menante 6, par exemple, les pignons de transmission 14 en prise sur la courroie de transmission 10 sont entraînés par cette dernière en rotation autour de leur axe. La courroie d'assujettissement 32 entraîne alors simultanément en rotation (3) les pignons 14 qui ne sont pas encore en prise avec la courroie de transmission 10, de manière à ce que ces derniers pignons 14 soient maintenus en phase avec cette dernière 10. Il résulte de ces dispositions que les pignons 14 qui n'étaient pas encore en prise sur la courroie de transmission 10 lors de la variation de diamètre de la couronne 6, engraîneront de façon certaine sur la dite courroie 10 lorsqu'ils viendront en prise sur celle-ci.

On remarquera sur les fig.1 et 3 que les brins d'extrémités 36 respectifs des courroies d'assujettissement 32 et 34 sont reliés à un même tambour 40, qu'ils entourent inversement. Il résulte de ces dispositions que les dits moyens antagonistes 18,10,12 de variation du diamètre des couronnes 6 et 8 constituent des moyens de sollicitation en traction respectifs des courroies d'assujettissement 32 et 34 pour maintenir leur encrantage sur leur couronne 6 et 8 respective.

On notera que les pignons 14 et 16 peuvent être montés librement tournant sur le corps 20 autour de leur axe, la limitation de leur mouvement tournant à un mouvement pivotant étant obtenu grâce aux dits moyens 18,10,12 de sollicitation en traction de leur courroie d'assujettissement respective 32 et 34, ces derniers moyens 18,10,12 devant nécessairement développer un effort au moins égal au couple appliqué sur chacun des pignons 14 et 16.

On remarquera que le changement du rapport de transmission peut être choisi d'une quelconque valeur, mais que la variation effective du dit rapport intervient lorsque les pignons de transmission 14 et 16 qui sont en prise sur les brins d'extrémités 38 et 36 des courroies d'assujettissement 32 et 34, sont libérés de leur prise sur les courroies de transmission 10 et 12, la dite libération étant nécessaire pour autoriser la variation de diamètre des couronnes 6 et 8.

En d'autres termes, les courroies de transmission 10 et 12 et les courroies d'assujettissement 32 et 34 forment respectivement deux à deux des ceintures temporaires 10,32 et 12,34 des couronnes 6 et 8, la continuité de ces ceintures 10,32 et 12,34 s'interrompant lorsque les dits pignons 14 et 16 en prise sur les brins d'extrémités 38 et 36 de leur courroie d'assujettissement 32 et 34, s'échappent de leur courroie de transmission 10 et 12.

On remarquera par ailleurs, que les échappées respectives hors des courroies de transmission 10 et 12 des pignons 14 et 16 en prise sur les extrémités 38 et 36 des courroies d'assujettissement 32 et 34, doivent être sensiblement simultanées, afin de rendre possible la variation du diamètre des couronnes menante 6 et menée 8 par rupture simultanée des dites ceintures 10,32 et 12,34.

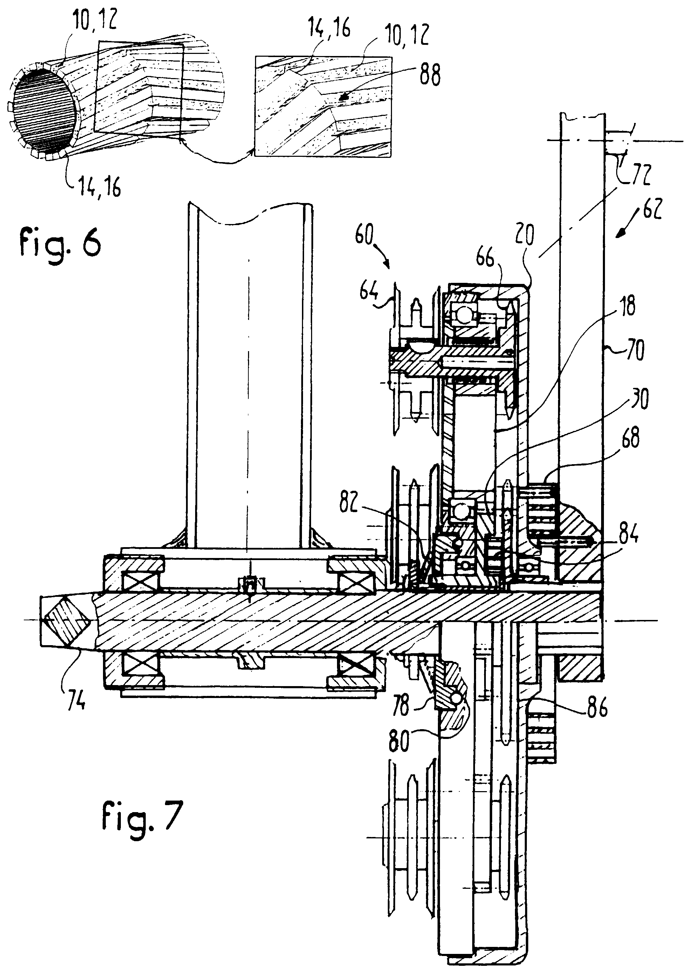

Selon une forme préférée de réalisation illustrée sur la fig.6, visant à compenser les effets susvisés résultant du ceinturage des couronnes 6,8, les organes d'encrantage des éléments souples de transmission 10,12 et des pignons 14,16 des couronnes 6,8 sont conformés en organes de type connu "à chevron" ; il résulte de ces dispositions que les écarts infimes longitudinaux d'encrantage des courroies de transmission 10,12 sur les couronnes 6,8, induits par la dite variation effective du rapport de transmission, sont compensés par un encrantage guidé et progressif des courroies de transmission 10,12 sur les couronnes 6,8 grâce à la conformation en chevron des organes d'encrantage respectifs des courroies 10,12 et des pignons 14,16 des couronnes 6,8 ; pour parachever ces dispositions, le profil en chevron des organes de transmission 10,12 et 6,8 est conformé de manière à ménager un espace 88 entre les organes d'encrantage des couronnes 6,8 et des courroies 10,12 lors de leur encrantage, le dit espace, ménagé dans la zone d'attaque des organes d'encrantage, permettant de guider et de placer de manière idoine ces derniers les uns par rapport aux autre malgré les dits écarts infimes longitudinaux d'encrantage.

Sur la fig.1, il apparaît que les courroies d'assujettissement 32 et 34 engraînent directement sur les pignons de transmission 14 et 16 eux-mêmes ; toutefois, il apparaît sur les fig. 3 et 4 qu'elles peuvent de manière équivalente et avec le même résultat engraîner sur une autre pluralité de pignons 15 et 17, dits d'assujettissement, respectivement supportés coaxialement par les pignons de transmission 14 et 16.

Selon cette dernière forme de réalisation représentée sur les fig.3 et 4, et selon une autre forme de réalisation visant à compenser les dits écarts infimes longitudinaux d'encrantage, il est avantageux que les pignons d'assujettissement 15 et 17 soient supportés par les pignons de transmission 14 et 16 par l'intermédiaire d'éléments souples 46 de type "Silentbloc" : ces éléments souples 46 permettent d'amortir les tensions radiales exercées sur les pignons d'assujettissement 15 et 17 lorsque les couronnes 6 et 8 se trouvent totalement enserrées par les dite ceintures 10,32 et 12,34. On notera que les dits éléments souples 46 n'interfèrent pas dans la mise en phase des pignons de transmission 14 et 16 avec leur courroie de transmission respective 10 et 12 lors d'une variation de diamètre des couronnes 6 et 8.

Sur la fig.5, un organe moteur 2 est relié à un couple de roues 48 et 50 par l'intermédiaire d'un mécanisme de transmission mettant en oeuvre un couple de variateurs 52 et 54 de l'invention. Le mécanisme représenté met en évidence une adaptation de l'invention à un mécanisme différentiels pour un véhicule à moteur.

Selon une forme de réalisation de l'invention souhaitable, non représentée sur les figures, la couronne menée 8 est formée d'un couple de couronnes élémentaires coaxiales placées de part et d'autre de la couronne menante 6, les manivelles 18 étant alors quadruples à trois paliers : deux branches d'extrémités, sur un même premier palier 24, supportant respectivement les pignons 16 des couronnes menée élémentaires, deux branches intermédiaires, sur un même deuxième palier 26, par lesquelles les manivelles 18 sont montées pivotantes sur le corps 20, et une branche médiane, sur un troisième palier 22, supportant les pignons 14 de la couronne menante 6.

Cette forme souhaitable de réalisation vise à limiter les contraintes à la torsion auxquelles sont soumises les manivelles 18, afin d'éviter leur vrillage.

On notera que l'on entend, d'une part par élément souple denté de transmission les éléments équivalents à ceux du type courroie et/ou chaîne, et d'autre part par pignon denté un élément comportant une denture suivant au moins un arc de cercle.

Par ailleurs, on comprendra que les moyens (18,10,12) de variation de diamètre des couronnes décrits et représentés sur les figures ne sont que préférés, et plus particulièrement que l'application de l'invention à un mécanisme présentant deux dites couronnes antagonistes (6,8) résulte d'un choix d'une forme avantageuse de réalisation des dits moyens (18,10,12) de variation de diamètre des couronnes.

Par exemple, l'invention peut trouver son application à un mécanisme dans lequel la couronne menée est coaxiale à l'arbre de sortie de l'organe menant et est directement entraînée en rotation par celui-ci, la dite couronne étant reliée à l'organe menée par un dite courroie de transmission. Par exemple toujours et dans ce cas, les dits moyens de sollicitation en traction de la courroie d'assujettissement peuvent comprendre une pignonerie constituée par des pignons montés tournant sur chacune des manivelles à leur palier médian, les dits pignons engrenant sur un pignon supporté par le tambour.

Sur la fig.7, un variateur de l'invention est appliqué à un cycle, "vélo" notamment, dans lequel les dits éléments souples de transmission sont des chaînes (non représentées sur la figure). On comprendra que le variateur représenté comporte une couronne unique 60 qui constitue l'organe, dit plateau, du cycle, coaxial au pédalier 62. L'intérêt de cet exemple d'application réside dans l'illustration d'une forme particulière de réalisation de l'invention dans laquelle la dite couronne 60 est unique.

On remarquera tout d'abord que les pignons 64 composant la couronne 60 sont respectivement liés en rotation et coaxiaux avec d'autres pignons 66, dits d'assujettissement, sur lesquels pignons d'assujettissement 66 est destinée à engraîner la chaîne d'assujettissement, les pignons 64 de la couronne 60 et les pignons d'assujettissement 66 étant judicieusement situés de part et d'autre du corps 20.

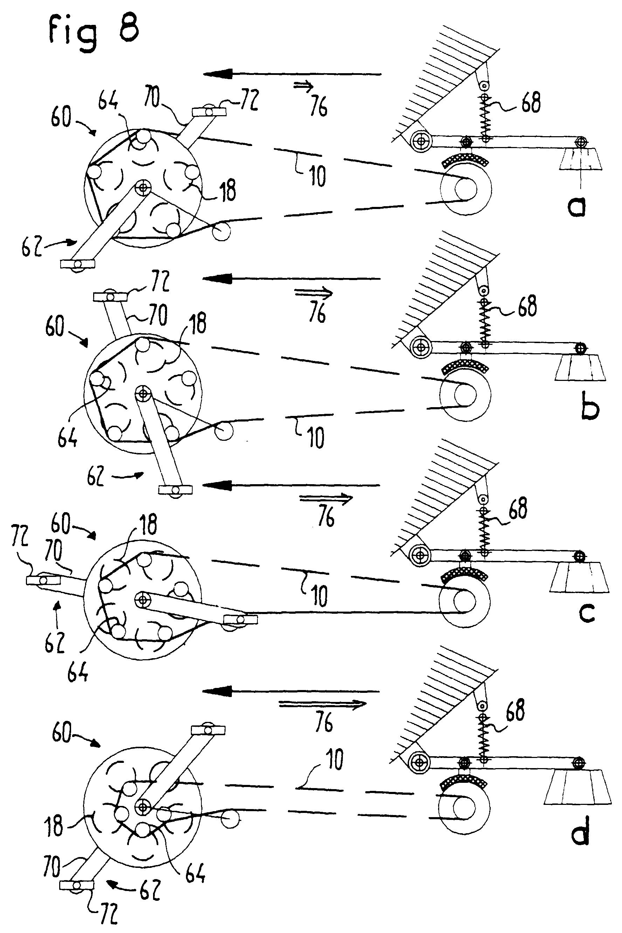

Les moyens de variation du diamètre de la couronne 60 sont globalement constitués,
1.- pour la sollicitation à l'extension, par des moyens élastiques 68 induisant une manoeuvre des manivelles 18 ; ces moyens élastiques sont par exemple constitués :
   a.- soit (selon une forme préférée de réalisation représentée sur la fig.7) par un ressort à spirale 68, dit de rappel, dont les extrémités sont respectivement fixées sur le corps 20 d'une part, et sur le bras de pédalier 70 d'autre part, le pédalier 62 étant lié en rotation, par l'intermédiaire de son moyeu 74, avec le pignon 30 de variation de diamètre de la couronne 60 engraînant sur les manivelles 18 qui supportent les pignons 64 composant la couronne 60 et les pignons d'assujettissement 68, de telle sorte que le ressort de rappel à spirale 68 induise spontanément un mouvement de pivot du pédalier 62 jusqu'à extension maximale de la couronne 60, le dit mouvement étant transmis aux manivelles 18 par l'intermédiaire du pignon 30 de variation de diamètre de la couronne 60, et de ce fait, de telle sorte que la couronne 60 soit spontanément sollicitée en extension ;
   b.- soit (selon une forme de réalisation proche de la précédente et non représentée sur les figures) par un ressort hélicoïdal, en remplacement du ressort de rappel à spirale 68 susvisé, supporté par le bras de pédalier 70, les extrémités du dit ressort hélicoïdal étant respectivement fixées sur le bras de pédalier 70 et sur le corps 20, la fixation du ressort sur le corps 20 étant obtenue par l'intermédiaire d'un pignon, dit intermédiaire, fixé sur le corps 20 et d'un brin souple engraînant sur le pignon intermédiaire ; cette forme de réalisation permet notamment de limiter l'encombrement du dispositif par rapport à la précédente forme de réalisation des dits moyens élastiques.
   c.- soit (selon une forme de réalisation non représentée sur les figures), par les manivelles 18 auxquelles sont adjoins des ressorts à spirale respectifs coaxiaux, les brins d'extrémités des ressorts à spirale étant respectivement supportés par le corps 20 et par les manivelles 18, les dits ressorts à spirale induisant une manoeuvre des manivelles 18 de telle sorte que la couronne 60 soit spontanément sollicitée en extension ;
2.- pour la sollicitation à la contraction, par des moyens d'entraînement en rotation du pignon de variation 30 (par le pédalier 62 notamment grâce à la poussée exercée par le cycliste sur les pédales 72), à l'encontre de la résistance (double flèche 76, fig.8) au déplacement du vélo, et de ce fait à l'encontre de l'entraînement en rotation du plateau 60, résistance à laquelle participe notamment les dits moyens élastiques 68 induisant l'extension de la couronne 60, l'inertie de l'équipage (vélo + cycliste) ainsi que la déclivité et la nature du terrain, de telle sorte qu'une poussée exercée sur les pédales 72 par le cycliste en vue de sa progression, et le mouvement du pédalier 62 en résultant induisent un pivotement des manivelles 18 inverse au pivotement induit par les dits moyens élastiques 68, à concurrence des efforts que désire fournir le cycliste pour se déplacer à l'encontre de la dite résistance 76 ; on notera que de préférence les moyens élastiques 68 sont réglables par l'utilisateur en fonction des efforts qu'il désire fournir.

On comprendra que le choix de la sollicitation en extension spontanée de la couronne 60 n'est que préféré, mais que de manière équivalente, les moyens susvisés pour l'extension et la contraction de la couronne 60 pourraient être aménagés inversement pour induire une tendance spontanée de la couronne à la contraction, c'est à dire pour induire une augmentation de la multiplication du rapport de vitesse ou encore une diminution de leur démultiplication.

Les fig.8a à 8d illustrent de manière schématique et dans leur principe les moyens de l'invention mis en oeuvre, ainsi que le mode de fonctionnement d'un vélo équipé d'un dispositif de l'invention.

On remarquera sur la fig.7, la présence avantageuse de moyens de retenue en rotation du pédalier 62 à l'encontre de la sollicitation en extension de la couronne 60 exercée par les dits moyens élastiques 68, les dits moyens de retenue étant par exemple constitués, tel que représenté sur la fig.7, par un organe 78 à billes 80 qui est solidaire en rotation du le pédalier 62 par l'intermédiaire de son moyeu 74, et qui est en appui élastique axial contre le corps 20, au moyen d'une rondelle concave 82 par exemple, les billes 80 étant destinées à freiner le mouvement de rotation du pédalier 62 lors de l'extension spontanée de la couronne 60, notamment lorsque le cycliste s'arrête, en pénétrant en contact glissant par sauts successifs, grâce à la poussée axiale élastique exercée par la rondelle concave 82, à l'intérieur de logements circulairement répartis sur le corps 20, jusqu'à ce que la couronne 60 soit en extension complète.

On notera que, de préférence, les logements ménagés dans le corps 20 sont circonférentiellement répartis les uns par rapport aux autres de telle sorte que les sauts successifs des billes 80 depuis un logement vers un logement voisin corresponde au passage d'un organe d'encrantage de la chaîne de transmission 10 depuis un organe d'encrantage de la couronne 60 vers un organe d'encrantage de cette dernière voisin.

On notera par ailleurs sur la fig.7, la présence d'un autre ressort à spirale 84, dit d'assujettissement, dont les extrémités sont respectivement fixées au pignon de variation 30 et au pignon 86, dit de réserve de la chaîne d'assujettissement, sur lequel pignon 86 est destiné à engraîner la chaîne d'assujettissement en vue de lui fournir la réserve qui lui est nécessaire. Il résulte de ces dispositions, non seulement que le ressort à spirale d'assujettissement 84 constitue un organe de liaison en rotation entre le pignon de variation 30 et le pignon 86 de réserve de la chaîne d'assujettissement, en vue d'induire la rotation de ce dernier lors d'une variation de diamètre de la couronne 60 pour libérer ou emmagasiner la réserve de la chaîne d'assujettissement, mais encore, la dite liaison entre le pignon de variation 30 et le pignon 86 de réserve de la chaîne d'assujettissement étant souple, que les dits écarts infimes longitudinaux d'encrantage de la chaîne de transmission 10, dus au ceinturage de la couronne 60, sont compensés par le ressort à spirale 84 d'assujettissement ; on remarquera qu'en outre, le ressort à spirale 84 d'assujettissement constitue des moyens tendeurs de la chaîne d'assujettissement.

Selon. une forme équivalente de réalisation non représentée sur les figures, le ressort à spirale 84 d'assujettissement est remplacé par une conformation en came du pignon de réserve 86, la dite conformation permettant de compenser les dits écarts infimes longitudinaux d'encrantage résultant du ceinturage de la couronne 60.

On comprendra l'application qui vient d'être décrite n'est qu'une forme spécifique de réalisation de l'invention, et que d'une manière générale, cette forme spécifique de réalisation est caractérisée en ce que la variateur de l'invention comprend une couronne (60) unique, les moyens pour faire varier le diamètre de la couronne (60) comprenant des moyens élastiques (68) pour l'une quelconque des sollicitations spontanées à l'extension et à la contraction de la couronne (60), les dits moyens élastiques (68) étant antagonistes de moyens d'entraînement en rotation d'un pignon de variation (30) du diamètre de la couronne, le dit pignon de variation (30) engraînant sur l'un des paliers d'une pluralité de manivelles (18), ces dernières (18) supportant, à un autre de leur palier, un pignon (64) de transmission respectif composant la dite couronne (60) ; selon une forme préférée de réalisation, les dits moyens élastiques (68) sont constitués par un ressort dont l'une des extrémités est fixée sur le corps (20) et dont l'autre extrémité est liée en rotation avec les manivelles (18), la dite liaison en rotation avec les manivelles étant soit une liaison directe entre le ressort et les manivelles (18), soit obtenue au moins par l'intermédiaire du pignon de variation (30), le dit ressort pouvant être soit un ressort à spirale, soit un ressort hélicoïdal, selon des formes de réalisation spécifiques et respectives.

Par ailleurs, les moyens élastiques sont, soit des moyens de sollicitation en extension de la couronne, soit des moyens de sollicitation à la contraction, l'une et/ou l'autre de ces options étant déterminée par le choix de l'extrémité du ressort à spirale respectivement fixée sur le corps et liée en rotation avec les manivelles, dans le cas d'utilisation d'un ressort à spirale, ou encore dans le choix du sens d'enroulement du lien souple engraînant sur le dit pignon intermédiaire fixé sur le corps, dans le cas d'utilisation d'un ressort hélicoïdal.

## Revendications

1. Variateur de vitesse en continu, du genre de ceux destinés à être intercalés entre un organe moteur (2) et un organe récepteur (4) de manière à les relier dynamiquement, le dit variateur comprenant :
- un corps (20) supportant au moins une pluralité de pignons ou de secteurs de pignons dentés coplanaires (14,16), dits de transmission, disposés suivant une circonférence à laquelle ils sont tangents intérieurement, leurs dents externes formant un espace annulaire, dit couronne (6,8), dans lequel lesdites dents sont comprises, un élément souple de transmission denté (10,12) engrenant sur ladite couronne (6,8) et la reliant à l'un quelconque des organes moteur (2) et récepteur (4),
- des moyens (18) pour éloigner ou rapprocher les pignons de transmission (14,16) de l'axe de ladite couronne au moins (6,8), c'est à dire des moyens pour faire varier le diamètre de cette couronne (6,8), et donc le rapport de transmission,
caractérisé :
en ce que lesdits pignons de transmission (14,16) sont supportés par le corps (20) de manière pivotante sur eux-mêmes, et sont équipés de moyens d'assujettissement (32,34) en pivotement les uns vis-à-vis des autres autour de leur axe respectif, le pivotement de l'un quelconque des pignons (14,16) induisant un pivotement correspondant des autres pignons (14,16) de manière à les maintenir en permanence tous en phase avec les crans de l'élément souple de transmission (10,12).

2. Variateur selon la revendication 1 caractérisé :
en ce que les moyens d'assujettissement en pivotement des pignons de transmission (14,16) sont formés d'une courroie dentée (32,34), dite d'assujettissement, ceinturant la dite couronne (6,8) en engrenant sur les pignons de transmission (14,16), et
en ce qu'au moins l'un des brins d'extrémité (36,38) de la courroie d'assujettissement (32,34) constitue une réserve de courroie en vue de permettre la variation de diamètre de la couronne (6,8), ledit brin d'extrémité au moins (36,38) étant relié à des moyens de sollicitation en traction (40,18,32,34,6,8), pour maintenir l'encrantage de la courroie d'assujettissement sur la dite couronne.

3. Variateur selon la revendication 1 caractérisé :
en ce que lesdits moyens pour faire varier le diamètre de la dite couronne (6,8) comprennent des moyens (18,10,12) de sollicitation en extension de ladite couronne (6,8) à l'encontre d'une sollicitation en contraction exercée par l'élément souple de transmission (10,12), et des moyens de commande (1) desdits moyens de sollicitation.

4. Variateur selon la revendication 2 caractérisé :
en ce que l'un brin (36) des brins d'extrémité de la courroie d'assujettissement (32,34) est enroulé sur, et fixé à, un tambour (40) monté tournant sur le corps (20), celui-ci étant pourvu de moyens (18,32,34,6,8) tendant à induire sa rotation sur lui même, ces derniers moyens (18,32,34,6,8) constituant lesdits moyens de sollicitation en traction de la courroie d'assujettissement (32,34), et
en ce que l'autre brin d'extrémité (38) de la courroie d'assujettissement (32,34) est enroulé sur, et fixé à, l'un pignon (42) des pignons de transmission (14,16).

5. Variateur selon l'une quelconque des revendications précédentes, caractérisé :
en ce qu'il comprend :
- une première pluralité de pignons de transmission (14) formant une première couronne (6), dite menante, reliée à l'organe moteur (2) par un premier élément souple de transmission (10), dit menant,
- une deuxième pluralité de pignons de transmission (16) formant une deuxième couronne (8), dite menée, reliée à l'organe récepteur (4) par un deuxième élément souple de transmission (12), dit mené, et
en ce que les moyens (18,22,24,26) pour faire varier le diamètre de l'une quelconque des couronnes (6,8) sont des moyens antagonistes (18,22,24,26) aux moyens pour faire varier le diamètre de l'autre couronne (8,6),
de telle sorte que la variation du diamètre de l'une quelconque des couronnes (6,8) induise une variation complémentaire inverse de l'autre couronne (8,6).

6. Variateur selon la revendication 5 caractérisé :
en ce que les moyens de variation du diamètre des couronnes (6,8) sont formés d'un jeu de double, au moins, manivelles (18) à trois paliers, dont deux paliers d'extrémité (22,24) et un palier médian (26), chacune des manivelles (18) supportant respectivement un pignon de transmission (14,16) des couronnes menante (6) et menée (8) à leurs paliers d'extrémités (22,24), et étant montées pivotantes sur le corps (20) par leur palier médian (26).

7. Variateur selon la revendication 6 caractérisé :
en ce que les paliers médians (26) des manivelles (18) sont chacun solidaire d'un pignon (28), dit de variation, engrenant sur une roue dentée (30), dite de variation, montée tournante sur le corps (20) coaxialement aux couronnes (6,8).

8. Variateur selon les revendications 2 et 5 caractérisé :
en ce que les courroies d'assujettissement (32,34) des couronnes menante (6) et menée (8) sont respectivement les deux brins d'extrémité d'une même courroie reliés l'un à l'autre par un brin intermédiaire circulant depuis l'une vers l'autre des couronnes (6,8) par l'intermédiaire de pignons de renvoie supportés par le corps (20),
de telle sorte que la courroie d'assujettissement (32,34) de l'une quelconque des couronnes menante (6) et menée (8) constitue ladite réserve de la courroie d'assujettissement (32,34) de l'autre des couronnes, et que l'une quelconque des couronnes (8,6) constitue ledit moyens de sollicitation en traction de la courroie d'assujettissement (32,34) de l'autre couronne (8,6).

9. Variateur selon les revendications 4 et 5 caractérisé :
en ce que les courroies d'assujettissement (32,34) des couronnes menante (6) et menée (8) sont reliés à un même tambour (40), leur brin d'extrémité (36) correspondant entourant inversement ce tambour (40).

10. Variateur selon les revendications 3 et 5 caractérisé :
en ce que les moyens de commande des moyens (18) de variation du diamètre des couronnes (6,8) sont constitués par des moyens d'éloignement (1) du corps (20) de l'un quelconque des organes moteur (2) et récepteur (4).

11. Variateur selon la revendication 1 (fig.7), caractérisé:
en ce qu'il comprend une couronne (60) unique, et
en ce que les moyens pour faire varier le diamètre de ladite couronne (60) comprennent des moyens élastiques (68) pour l'une quelconque des sollicitations spontanées à l'extension et à la contraction de ladite couronne (60), lesdits moyens élastiques (68) étant antagonistes de moyens d'entraînement en rotation d'un pignon de variation (30) du diamètre de la couronne, ledit pignon de variation (30) engrenant sur l'un des paliers d'une pluralité de manivelles (18), ces dernières (18) supportant, à un autre de leur palier, un pignon (64) de transmission respectif composant ladite couronne (60).

12. Variateur selon la revendication 11, caractérisé :
en ce que lesdits moyens élastiques (68) sont constitués par un ressort dont l'une des extrémités est fixée sur le corps (20) et dont l'autre extrémité est liée en rotation avec les manivelles (18).

## Patentansprüche

1. Stufenloses Regelgetriebe nach Art derer, die so zwischen ein Antriebsorgan (2) und ein Empfängerorgan (4) geschaltet werden, daß sie dynamisch miteinander verbunden werden, wobei das besagte Getriebe folgendes enthält:
- einen Körper (20), der mindestens eine Vielzahl von koplanaren Zahnritzeln oder Zahnritzelsegmenten (14, 16), Kraftübertragungselemente genannt, trägt, die nach einem Umfang angeordnet sind, den sie innen tangential berühren, wobei ihre äußeren Zähne einen ringförmigen Raum, Kranz (6, 8) genannt, bilden, in dem die besagten Zähne eingeschlossen sind, und ein flexibles verzahntes Kraftübertragungselement (10, 12) in den besagten Kranz (6, 8) eingreift und ihn mit einem der Antriebs- (2) und Empfängerorgane (4) verbindet,
- Mittel (18), um die Kraftübertragungsritzel (14, 16) von der Achse mindestens des besagten Kranzes (6, 8) zu entfernen oder an sie anzunähern, das heißt Mittel, um den Durchmesser dieses Kranzes (6, 8) und somit das Übersetzungsverhältnis zu verändern,
gekennzeichnet:
dadurch, daß die besagten Kraftübertragungsritzel (14, 16) vom Körper (20) um sich selbst schwenkbar getragen werden und mit Befestigungsmitteln (32, 34), von denen die einen gegenüber den anderen um ihre jeweilige Achse schwenken, ausgestattet sind, wobei das Schwenken eines der Ritzel (14, 16) zu einem entsprechenden Schwenken der anderen Ritzel (14, 16) führt, so daß sie alle ständig phasengleich mit den Kerben des flexiblen Kraftübertragungselements (10, 12) gehalten werden.

2. Getriebe nach Anspruch 1, gekennzeichnet:
dadurch, daß die Mittel zur schwenkbaren Befestigung der Kraftübertragungsritzel (14, 16) aus einem Zahnriemen (32, 34), Befestigungsriemen genannt, gebildet sind, der den besagten Kranz (6, 8) umgibt und in die Kraftübertragungsritzel (14, 16) eingreift, und
dadurch, daß mindestens eines der Endtrümmer (36, 38) des Befestigungsriemens (32, 34) eine Riemenreserve darstellt, damit der Durchmesser des Kranzes (6, 8) verändert werden kann, wobei mindestens das besagte Endtrum (36, 38) mit Zugbeanspruchungsmitteln (40, 18, 32, 34, 6, 8) verbunden ist, um den Eingriff des Befestigungsriemens mit dem besagten Kranz aufrechtzuerhalten.

3. Getriebe nach Anspruch 1, gekennzeichnet:
dadurch, daß die besagten Mittel zur Veränderung des Durchmessers des besagten Kranzes (6, 8) Mittel (18, 10, 12) zur Dehnungsbeanspruchung des besagten Kranzes (6, 8) gegen eine Kontraktionsbeanspruchung, die von dem flexiblen Kraftübertragungselement (10, 12) ausgeübt wird, und Mittel zur Steuerung (1) der besagten Beanspruchungsmittel enthalten.

4. Getriebe nach Anspruch 2, gekennzeichnet:
dadurch, daß das eine Trum (36) der Endtrümmer des Befestigungsriemens (32, 34) auf eine Trommel (40), die drehbar an den Körper (20) montiert ist, aufgewickelt und auf ihr befestigt ist, wobei diese mit Mitteln (18, 32, 34, 6, 8) ausgestattet ist, die dazu neigen, ihre Drehung auf sie selbst zu übertragen, wobei diese letztgenannten Mittel (18, 32, 34, 6, 8) die besagten Mittel zur Zugbeanspruchung des Befestigungsriemens (32, 34) darstellen, und
dadurch, daß das andere Endtrum (38) des Befestigungsriemens (32, 34) auf ein Ritzel (42) der Kraftübertragungsritzel (14, 16) aufgewickelt und auf ihm befestigt ist.

5. Getriebe nach einem der obenstehenden Ansprüche, gekennzeichnet:
dadurch, daß es folgendes enthält:
- eine erste Vielzahl von Kraftübertragungsritzeln (14), die einen ersten Kranz (6), treibend genannt, bilden, der mit dem Antriebsorgan (2) über ein erstes flexibles Kraftübertragungselement (10), treibend genannt, verbunden ist,
- eine zweite Vielzahl von Kraftübertragungsritzeln (16), die einen zweiten Kranz (8), getrieben genannt, bilden, der mit einem Empfängerorgan (4) über ein zweites flexibles Kraftübertragungselement (12), getrieben genannt, verbunden ist, und
dadurch, daß die Mittel (18, 22, 24, 26) zur Veränderung des Durchmessers eines der beiden Kränze (6, 8) gegenwirkende Mittel (18, 22, 24, 26) zu den Mitteln zur Veränderung des Durchmessers des anderen Kranzes (8, 6) sind,
so daß die Veränderung des Durchmessers eines der Kränze (6, 8) zu einer umgekehrten ergänzenden Veränderung des anderen Kranzes (8, 6) führt.

6. Getriebe nach Anspruch 5, gekennzeichnet:
dadurch, daß die Mittel zur Veränderung des Durchmessers der Kränze (6, 8) aus einem Satz mindestens doppelter Kurbeln (18) mit drei Lagern, wovon zwei äußere Lager (22, 24) sind und ein ein mittleres Lager (26) ist, gebildet sind, wobei jede der Kurbeln (18) jeweils ein Kraftübertragungsritzel (14, 16) des treibenden (6) und des getriebenen (8) Kranzes an ihren äußeren Lagern (22, 24) trägt und durch ihr mittleres Lager (26) schwenkbar an den Körper (20) montiert ist.

7. Getriebe nach Anspruch 6, gekennzeichnet:
dadurch, daß die mittleren Lager (26) der Kurbeln (18) jeweils mit einem Ritzel (28), Veränderungsritzel genannt, das in ein Zahnrad (30), Veränderungszahnrad genannt, eingreift, das koaxial mit den Kränzen (6, 8) drehbar an den Körper (20) montiert ist, fest verbunden sind.

8. Getriebe nach den Ansprüchen 2 und 5, gekennzeichnet:
dadurch, daß die Befestigungsriemen (32, 34) des treibenden (6) und des getriebenen (8) Kranzes jeweils die beiden Endtrümmer ein und desselben Riemens sind, die miteinander durch ein Zwischentrum, das vom einen zum anderen Kranz (6, 8) über vom Körper (20) getragene Umlenkritzel verläuft, verbunden sind,
so daß der Befestigungsriemen (32, 34) eines der treibenden (6) und getriebenen (8) Kränze die besagte Reserve des Befestigungsriemens (32, 34) des anderen der Kränze darstellt und einer der Kränze (8, 6) die besagten Mittel zur Zugbeanspruchung des Befestigungsriemens (32, 34) des anderen Kranzes (8, 6) darstellt.

9. Getriebe nach den Ansprüchen 4 und 5, gekennzeichnet:
dadurch, daß die Befestigungsriemen (32, 34) des treibenden (6) und des getriebenen (8) Kranzes mit ein und derselben Trommel (40) verbunden sind, wobei ihr entsprechendes Endtrum (36) diese Trommel (40) umgekehrt umgibt.

10. Getriebe nach den Ansprüchen 3 und 5, gekennzeichnet:
dadurch, daß die Mittel zur Steuerung der Mittel (18) zur Veränderung des Durchmessers der Kränze (6, 8) aus Mitteln zur Entfernung (1) eines der Antriebs- (2) und Empfängerorgane (4) vom Körper (20) bestehen.

11. Getriebe nach Anspruch 1 (Abb. 7), gekennzeichnet:
dadurch, daß es einen einzigen Kranz (60) enthält, und
dadurch, daß die Mittel zur Veränderung des Durchmessers des besagten Kranzes (60) elastische Mittel (68) für eine der spontanen Dehnungs- und Kontraktionsbeanspruchungen des besagten Kranzes (60) enthalten, wobei die besagten elastischen Mittel (68) gegenwirkend zu Antriebsmitteln zur Drehung eines Ritzels zur Veränderung (30) des Durchmessers des Kranzes sind, das besagte Veränderungsritzel (30) in eines der Lager einer Vielzahl von Kurbeln (18) eingreift und diese letztgenannten (18) an einem anderen ihrer Lager jeweils ein Kraftübertragungsritzel (64), das besagten Kranz (60) bildet, tragen.

12. Getriebe nach Anspruch 11, gekennzeichnet:
dadurch, daß die besagten elastischen Mittel (68) aus einer Feder gebildet sind, deren eines Ende am Körper (20) befestigt ist und deren anderes Ende drehend mit den Kurbeln (18) verbunden ist.

## Claims

1. Continuous speed-variation mechanism, of the type designed to be interposed bctween a motor unit (2) and a receiver unit (4) so as to connect them dynamically, the said speed-variation mechanism comprising:
- a body (20) which supports at least several gearwheels or coplanar gearwheel sectors (14, 16), known as the transmission gearwheels, arranged around a circumference to which they are internally tangent, and whose outside teeth form an annular space known as a crown (6, 8), within which the said teeth are contained, with a flexible toothed transmission element (10, 12) which meshes with the said crown (6, 8) and connects it to the motor unit (2) or to the receiver unit (4),
- means (18) to move the transmission gearwheels (14, 16) further away or closer to the axis of the said crown (6, 8) at least, in other words means to vary the diameter of the said crown (6, 8) and hence the transmission ratio,
**characterized in that**
the said transmission gearwheels (14, 16) are supported by the body (20) such that they can pivot about themselves, and are provided with means (32, 34) to link the pivoting of each about its own axis relative to the others, such that when any one of the gearwheels (14, 16) pivots this will induce a corresponding pivoting of the other gearwheels (14, 16) so as to keep them all constantly in phase with the splines of the flexible transmission element (10, 12).

2. Speed-variation mechanism according to Claim 1,
**characterized in that**
the means provided to link the pivoting of the transmission gearwheels (14, 16) consist of a toothed strap (32, 34), known as the linking strap, which surrounds the said crown (6, 8) and engages with the transmission gearwheels (14, 16),
**and in that**
at least one of the sections (36, 38) at the end of the linking strap (32, 34) constitutes a reserve section of the strap designed to allow the diameter variation of the crown (6, 8), the said at least one end section (36, 38) being connected to means of tensioning (40, 18, 32, 34, 6, 8) to maintain the engagement of the linking strap with the said crown.

3. Speed-variation mechanism according to Claim 1,
**characterized in that**
the said means of varying the diameter of the said crown (6, 8) comprise means (18, 10, 12) to exert a force tending to expand the said crown (6, 8) against the contraction force exerted by the flexible transmission element (10, 12), and means (1) of controlling the said means of exerting the forces.

4. Speed-variation mechanism according to Claim 2,
**characterized in that**
one section (36) of the two end sections of the linking strap (32, 34) is rolled on and attached to a drum (40) mounted to rotate on the body (20), this drum being provided with means (18, 32, 34, 6, 8) tending to induce its rotation about itself, the said means (18, 32, 34, 6, 8) constituting the said means of tensioning the linking belt (32, 34),
**and in that**
the other end section (38) of the linking strap (32, 34) is rolled on and attached to one gearwheel (42) of the transmission gearwheels (14, 16).

5. Speed-variation mechanism according to any of the preceding claims,
**characterized in that**
it comprises:
- a first group of transmission gearwheels (14) forming a first crown (6) known as the driving crown, which is connected to the motor unit (2) by a first flexible transmission element (10) known as the driving element,
- a second group of transmission gearwheels (16) forming a second crown (8) known as the driven crown, which is connected to the receiving unit (4) by a second flexible transmission element (12) known as the driven element,
**and in that**
the means (18, 22, 24, 26) of varying the diameter of either of the crowns (6, 8) are means (18, 22, 24, 26) acting in opposition to the means of varying the diameter of the other crown (6, 8),
such that variation of the diameter of one of the crowns (6, 8) induces a complementary inverse variation of the other crown (6, 78).

6. Speed-variation mechanism according to Claim 5,
**characterized in that**
the means of varying the diameter of the crowns (6, 8) consist of at least a double range of cranks (18) with three sections, two end sections (22, 24) and one middle section (26), each of the said cranks supporting one transmission gearwheel (14, 16) belonging respectively to the driving (6) and driven (8) crowns on their end sections (22, 24) and being mounted so as to pivot on the body (20) by their middle section (26).

7. Speed-variation mechanism according to Claim 6,
**characterized in that**
the middle sections (26) of the cranks (18) are each firmly attached to a gearwheel (28) known as the variation gearwheel, which engages with a toothed wheel (30), known as the variation wheel, which is mounted so as to rotate on the body (20) coaxially with the crowns (6, 8).

8. Speed-variation mechanism according to Claims 2 and 5,
**characterized in that**
the linking straps (32, 34) of the driving (6) and driven (8) crowns are respectively the two end sections of one and the same belt connected to one another via an intermediate section which moves around from one crown (6, 8) towards the other under the action of supporting gearwheels on the body (20),
such that the linking strap (32, 34) of either of the driving (6) and driven (8) crowns constitutes the said reserve section of the linking strap (32, 34) of the other crown, and either of the crowns (8, 6) constitutes the said means of tensioning the linking strap (32, 34) of the other crown (8, 6).

9. Speed-variation mechanism according to Claims 4 and 5,
**characterized in that**
the linking straps (32, 34) of the driving (6) and driven (8) crowns are connected to the same drum (40), with their corresponding end sections (36) around this drum (40) in opposite directions.

10. Speed-variation mechanism according to Claims 3 and 5,
**characterized in that**
the means for controlling the means (18) of varying the diameter of the crowns (6, 8) consist of means (1) for moving the body (20) away from either the motor unit (2) or the receiver unit (4).

11. Speed-variation mechanism according to Claim 1 (Fig. 7),
**characterized in that**
it comprises a single crown (60),
**and in that**
the means of varying the diameter of the said crown (60) comprise elastic means (68) for either the spontaneous expansion or contraction force of the said crown (60), the said elastic means (28) acting in opposition to the means of rotating a crown diameter variation gearwheel (30), the said variation gearwheel (30) engaging with one of the sections of a number of cranks (18), each of the said cranks (18) supporting on another of their sections a respective transmission gearwheel (64) composing the said crown (60).

12. Speed-variation mechanism according to Claim 11,
**characterized in that**
the said elastic means (68) consist of a spring one of whose ends is attached to the body (20) while the other end is connected in rotation with the cranks (18).
